# EUROPÄISCHE PATENTSCHRIFT

(11) **EP 1 475 561 B1**
(45) Veröffentlichungstag und Bekanntmachung des Hinweises auf die Patenterteilung: **16.11.2005**
(21) Anmeldenummer: 04090184.5
(22) Anmeldetag: 07.05.2004
(51) Int. Cl.: F16L 21/03, F16L 47/10

(54) **Rohrverbindung**
Pipe connection
Raccord de tuyaux

(30) Priorität: 08.05.2003 DE 10321302
(43) Veröffentlichungstag der Anmeldung: 10.11.2004
(73) Patentinhaber: Geberit Mapress GmbH, 40764 Langenfeld (DE)
(72) Erfinder: Gigowski, Thomas, 41517 Grevenbroich (DE)
(74) Vertreter: Meissner, Peter E.

(56) Entgegenhaltungen:
- FR-A- 1 520 687
- GB-A- 1 359 525
- US-A- 3 265 410

## Beschreibung

Die Erfindung betrifft eine Rohrverbindung gemäß dem Oberbegriff des Patentanspruches 1.

Eine Rohrpressverbindung zwischen einem Fitting und einem Metallrohrende wird in der EP 0922896 A1 beschrieben. Zur Erstellung der Rohrpressverbindung wird der Einschiebebereich des Fittings neben dem Dichtelement mit einem Sicherungselement zur axialen Sicherung versehen, das sich bei der radialen Verpressung des Einschiebebereiches mit dem Rohrende in das Material des Metallrohres eingräbt.

Diese nach dem Stand der Technik bekannte Rohrverbindung hat den Nachteil, dass zur Herstellung einer dichten und axial gesicherten Verbindung ein zusätzliches Verpresswerkzeug notwendig ist.

Gattungsgemäße Rohrverbindungen die kein zusätzliches Verpresswerkzeug benötigen sind ebenfalls bekannt (US 3,920,270, EP 0616161 B1, Broschüre Woeste'Yorkshire', Tectite Steckfittings, Erkrath, Frühjahr 2001 sowie Broschüre Kemper GmbH ,Olpe -"Kemper-Click"-Januar 2002). Die hier beschriebenen Rohrverbindungen sind als so genannte Steckfittings bekannt, bei denen das Leitungsrohr in den Fitting eingesteckt wird. Der Dichtring ist entweder im Fitting oder auf dem Leitungsrohr vormontiert, wobei die Abdichtung durch die Kompression des elastischen Dichtringes aus der Überdeckung zwischen Rohraußendurchmesser und Dichtringinnendurchmesser oder Fittinginnendurchmesser und Dichtringaußendurchmesser erzeugt wird.

Die axiale Sicherung wird bei diesen Rohrverbindungen erreicht durch einen auf dem Leitungsrohrumfang angeordnete Sicherungsring der in eine entsprechende Ringnut im Fitting bei der Montage einrastet "(Kemper-Click"), oder durch einen im Fitting angeordneten Sicherungsring mit einer am Innenumfang zahnartigen Oberfläche, der sich beim Einschieben des Leitungsrohres mit der Mantelfläche des Leitungsrohres verkrallt (US 3,920,270 bzw. EP 0616161 B1).

In der US-A-3 265 410 ist eine Rohrverbindung offenbart, die alle Merkmale des Oberbegriffs des Anspruchs 1 umfasst.

Nachteilig bei den beschriebenen Steckfittingen ist, dass die Toleranzen der für die Verbindung maßgebenden Durchmesser von Leitungsrohr, Fitting und Dichtring großen Einfluss auf die Dichtheit, die axiale Sicherung sowie die Montierbarkeit der Verbindung haben.

Bei ungünstiger Paarung der Durchmessertoleranzen von Leitungsrohr, Fitting, Dichtring und Sicherungsring, kann eine zu geringe Kompression des Dichtringes zu Undichtigkeiten führen und die axiale Sicherung nicht ausreichend sein. Andererseits müssen die Durchmessertoleranzen in einem Bereich liegen, in dem ein Einschieben des Leitungsrohres in den Fitting überhaupt möglich ist. Grundsätzlich besteht bei diesen Rohrverbindungen immer die Gefahr, dass Beschädigungen des Dichtringes beim Einführen des Leitungsrohres auftreten können.

Aufgabe der Erfindung ist es deshalb, eine Rohrverbindung der gattungsgemäßen Art anzugeben, die in einfacher und kostengünstiger Weise die geschilderten Nachteile nicht aufweist.

Diese Aufgabe wird nach dem Oberbegriff in Verbindung mit den kennzeichnenden Merkmalen des Anspruchs 1 gelöst. Vorteilhafte Weiterbildungen sind Gegenstand von Unteransprüchen.

Nach der Lehre der Erfindung wird zur Lösung dieser Aufgabe ein Dichtelement verwendet, dessen Innendurchmesser größer als der Außendurchmesser des Leitungsrohres ist.

Beim Einschieben des Leitungsrohres kommt die Stirnseite am Kragen des Mitnahmeelementes zur Anlage, wobei nach Einschub in den zylindrischen Abschnitt das Dichtelement abdichtend auf die Mantelfläche des Leitungsrohres gedrück wird und das das Dichtelement umfassende Mitnahmeelement abdichtend auf der Innenseite des zylindrischen Abschnittes des Fittings zur Anlage kommt. Idealerweise ist die Kompression des Dichtelementes dabei so groß, dass neben der Dichtfunktion eine Axialsicherung für das Leitungsrohr erreicht wird.

Die Erfindung ist nicht nur bei Verwendung eines Außenfittings anwendbar sondern analog auch für einen Innenfitting, auf den ein Leitungsrohr aufgeschoben wird.

Der Vorteil der erfindungsgemäßen Rohrverbindung ist darin zu sehen, dass die Rohrverbindung unabhängig von den aktuellen Toleranzen von Leitungsrohr, Fitting oder Dichtring nunmehr allein über die Größe der radialen Stauchung des Mitnahmeelementes mit dem darin eingeschlossenen Dichtring die Kompression des Dichtringes zwischen Fitting und Leitungsrohr eingestellt werden kann, wobei eine dichte und axial gesicherte Verbindung hergestellt wird.

Als vorteilhafte Weiterbildung weist die Rohrverbindung eine zusätzliche Axialsicherung für das Leitungsrohr auf. Das Mitnahmeelement ist dazu als Sicherungselement ausgebildet und weist am rückwärtigen Ende einen sich radial erstreckenden Abschnitt auf.

Im endmontierten Zustand ist der Endbereich des Leitungsrohres mitsamt dem Dicht- und Sicherungselement axial bis in den Bereich des zylindrischen Abschnittes des Fittings verschoben, wobei sich durch radiales Stauchen das rückwärtige Ende des Sicherungselementes mit der Mantelfläche des Leitungsrohres axial sichernd verkrallt.

Zur Vereinfachung der Herstellung der Rohrverbindung auf der Baustelle, kann das Dichtelement gemeinsam mit dem Mitnahmeelement im aufgeweiteten Bereich des Fittings vormontiert angeordnet werden.

Vorteilhaft werden durch diese Anordnung ebenfalls Beschädigungen beim Einschieben des Leitungsrohres vermieden, da ein Kontakt des Leitungsrohres mit dem Dichtring beim Einschieben des Leitungsrohres in den Fitting nicht erfolgt.

Zur Sicherstellung einer qualitätssicheren Verbindung zwischen Leitungsrohr und Fitting, weist nach einem weiteren Merkmal der Fitting einen Axialanschlag auf, bis zu dem das Leitungsrohr mitsamt Mitnahme- und Dichtelement vorgeschoben werden muss.

Das aus Metall oder hartem Kunststoff bestehende Mitnahmeelement kann nach einer vorteilhaften Weiterbildung, zur Verbesserung der Dichtwirkung in der Dichtebene zwischen Mitnahmeelement und Fitting, gitterartige Unterbrechungen aufweisen.

Hierdurch wird ermöglicht, dass das vom Mitnahmeelement teilweise umfasste Dichtelement bei der radialen Komprimierung im Montagezustand durch die gitterartigen Unterbrechungen des Mitnahmeelementes hindurchtritt und so mit der Mantelfläche des Fittings abdichtend in Berührung kommt

Vorteilhaft ist dazu das Dichtelement als elastischer Dichtring ausgebildet und die gitterförmigen Unterbrechungen des Mitnahmeelementes in der Weise ausgestaltet, dass bei der radialen Komprimierung des Mitnahmeelementes gemeinsam mit dem Dichtring, in der Berührungsebene mit dem Fitting eine durchgehende Kontaktierung zwischen Dichtring und Fitting erreicht wird.

Eine weitere Möglichkeit zur Verbesserung der Dichtwirkung kann auch darin bestehen, die Wanddicke des den Fitting berührenden Umfangsbereiches des Mitnahmeelementes zu reduzieren, um über eine größere Elastizität in diesem Bereich eine innige Kontaktierung mit dem Fitting zu ermöglichen.

Auch ist denkbar, dass im Kontaktbereich des Mitnahmeelementes mit dem Fitting ein aus elastischem Material bestehendes Ringelement einvulkanisiert wird, so dass bei der radialen Komprimierung des Mitnahmeelementes mit dem Dichtring über die Aktivierung der elastischen Rückstellkräfte ein inniger und dichter Verbund zwischen Leitungsrohr und Fitting realisiert werden kann.

Nach einem weiteren Merkmal kann die Verkrallung des Mitnahmeelementes mit dem Leitungsrohr wahlweise über einzeine Verkrallelemente oder über eine ringscheibenförmige Ausbildung des rückwärtigen Endes des Mitnahmeelementes erfolgen.

Nach einer weiteren vorteilhaften Ausgestaltung ist die Rohrverbindung mit einer weiteren axialen Ausziehsicherung versehen, die zusätzlich oder alternativ zu den beschriebenen Axialsicherungen eingesetzt werden kann.

Dazu weist das Mitnahmeelement zwischen dem Kragen und dem Beginn des Umfassungsbereiches des Dichtelementes einen hülsenartigen Abschnitt auf, in den das Leitungsrohr bei der Montage hinein geschoben wird. Der Innendurchmesser dieses Abschnittes entspricht hierbei mindestens dem Außendurchmesser des Leitungsrohres.

Die Mantelfläche des hülsenartigen Abschnittes ist Ober den Umfang mit Verkrallelementen versehen, die im vormontierten Zustand aus der Ebene des hülsenartigen Abschnittes heraus verschwenkt angeordnet sind. Vorteilhaft werden die Verkrallelemente durch Einstanzen des Mantels im Bereich des hülsenartigen Abschnittes des Mitnahmeelements und anschließendes Verschwenken der Elemente hergestellt.

Zur Realisierung der zusätzlichen Ausziehsicherung weist der Fitting ausgehend von dem einschubseitigen zylindrischen Abschnitt in Einschubrichtung einen weiteren zylindrischen Abschnitt auf, in den das Leitungsrohr mit dem hülsenartigen Abschnitt des Mitnahmeelementes hinein geschoben werden kann. Der Außendurchmesser des hülsenartigen Abschnittes des Mitnahmeelementes ist geringfügig kleiner, als der Innendurchmesser des zylindrischen Abschnittes des Fittings, so dass beim Einschieben des Leitungsrohres gemeinsam mit dem hülsenartigen Abschnitt des Mitnahmeelementes bis in den zylindrischen Abschnitt des Fittings sich die Verkrallelemente axial sichernd in die Mantelfläche des Fittings und des Leitungsrohres eingraben.

Zur Sicherstellung einer qualitätssicheren Verbindung zwischen Leitungsrohr und Fitting, entspricht die axiale Erstreckung des zylindrischen Abschnittes des Fittings, in den das Leitungsrohr mit dem hülsenförmigen Abschnitt des Fittings hinein geschoben werden muss, mindestens der axialen Erstreckung des hülsenförmigen Abschnittes, wobei der Fitting nach einem weiteren Merkmal einen Axialanschlag aufweist, bis zu dem das Leitungsrohr zusammen mit dem Mitnahme- und Dichtelement vorgeschoben werden muss.

Erfindungsgemäß kann die Rohrverbindung durch einen Klemmring zusätzlich gegen axiales Lösen gesichert werden. Dazu ist im Radialspalt zwischen dem aufgeweiteten oder eingezogenen Abschnitt des Fittings und dem Leitungsrohr ein Klemmring angeordnet, der im endmontierten Zustand des Leitungsrohres mit der in Einschubrichtung weisenden Stirnfläche des Mitnahmeelementes gegen axiales Lösen gesichert, zur Anlage kommt.

Dies wird dadurch erreicht, dass der Klemmring in den Fitting eingeschraubt werden kann. Dazu ist der Fitting im aufgeweiteten Abschnitt am Innenumfang mit einem Gewinde versehen. Der mit einem entsprechenden Gewinde versehene Klemmring kann dabei aus Metall oder hartem Kunststoff bestehen wobei zur Montage eine relative axiale Verschiebbarkeit des Klemmringes auf dem Leitungsrohr gewährleistet sein muss.

Über eine entsprechend gewählte Gewindelänge kann dann vorteilhaft ebenfalls die Stärke der Verkrallung des Mitnahmeelementes mit dem Leitungsrohr eingestellt werden.

Als weitere Möglichkeit kann die axiale Lösesicherung auch durch eine reibschlüssige Anordnung des Klemmringes erfolgen. Dazu besteht der Klemmring aus einem elastischen Material, wobei im Ausgangszustand die radiale Querschnittserstreckung in der Vertikalebene größer ist, als die Erstreckung des Radialspaltes zwischen Leitungsrohr und dem aufgeweiteten Bereich des Fittings.

Bei der Montage wird der Klemmring durch radiales Stauchen in den zwischen dem Leitungsrohr und dem aufgeweiteten Abschnitt des Fittings entstandenen Ringspalt axial bis zur Endposition eingeschoben, wobei im endmontierten Zustand der Rohrverbindung, der Klemmring über den durch die Rückstellkräfte des elastischen Klemmringmaterials erzeugten Reibschluss zwischen Klemmring und Fitting, mit der in Einschubrichtung weisenden Stirnfläche des Mitnahmeelementes gegen axiales Lösen gesichert, zur Anlage kommt.

Eine Sicherung gegen Lösen des elastischen Klemmringes kann dadurch erreicht werden, dass das einschubseitige Ende des Fittings im endmontierten Zustand einen radial sich nach innen oder außen erstreckenden Kragen aufweist, der an der einschubseitigen Stirnfläche des Klemmringes zur Anlage kommt.

Der Fittingkragen kann aber auch nach einem weiteren Merkmal ersetzt werden durch ein entsprechend ausgebildetes Halteelement, das in einfacher Weise auf dem Fitting gegen axiales Verschieben gesichert, montiert werden kann. Das Halteelement ist ebenfalls mit einem sich radial nach innen erstreckenden Kragen versehen, der im endmontierten Zustand an der einschubseitigen Stirnfläche des Klemmringes zur Anlage kommt.

Weitere Merkmale, Vorteile und Einzelheiten der Erfindung ergeben sich aus der nachfolgenden Beschreibung.

Es zeigen:
- **Figur 1a**: Ausschnittweise, im Längsschnitt dargestellte Rohrverbindung mit Außenfitting im vormontierten Zustand,
- **Figur 1b**: wie Figur 1a, im endmontierten Zustand
- **Figur 2a**: wie Figur 1a mit zusätzlichen Axialsicherungen durch Verkrallelemente
- **Figur 2b**: wie Figur 2a im endmontierten Zustand
- **Figur 3**: Lösesicherung einer axial gesicherten Rohrverbindung gemäß Figur 2, durch einen einschraubbaren Klemmring,
- **Figur 4a**: Lösesicherung einer axial gesicherten Rohrverbindung gemäß Figur 2 durch einen elastischen Klemmring
- **Figur 4b**: Lösesicherung der Klemmringe nach Figur 3 und 4a

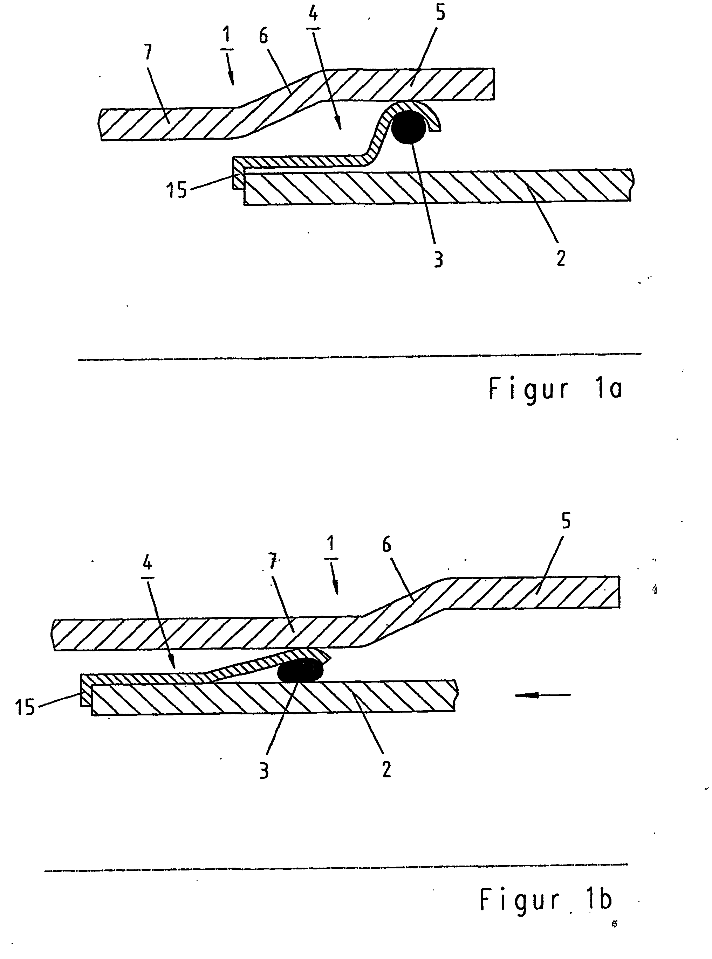

In **Figur 1a** ist im Längsschnitt ein erstes einfaches Ausführungsbeispiel einer erfindungsgemäß ausgebildeten Rohrverbindung mit Außenfitting im vormontierten Zustand dargestellt.

Ausgehend von einem zylindrisch ausgebildeten Abschnitt 7 weist der Fitting 1 mit einem Übergang 6 einen aufgeweiteten Abschnitt 5 auf. In dieser Darstellung befindet sich das Dichtelement 3, hier in Form eines Dichtringes, im aufgeweiteten Abschnitt 5 und wird teilweise von einem Mitnahmeelement 4 umfasst. Das Mitnahmeelement 4 weist am hier links liegenden Ende einen radial nach innen sich erstreckenden Kragen 15 auf.

Das Leitungsrohr 2 ist in den Einschubbereich des Fittings 1 eingeführt, wobei die Stirnfläche des Leitungsrohres 2 an dem Kragen 15 des vormontierten Mitnahmeelementes 4 zur Anlage kommt. Da der innendurchmesser des Dichtringes 3 größer ist, als der Außendurchmesser des Leitungsrohres 2 wird der Dichtring 3 beim Einführen des Leitungsrohres 2 in den Fitting 1, nicht berührt.

Bei einer weiteren axialen Verschiebung des Leitungsrohres 2 in den Fitting 1, gemäß **Figur 1b**, werden mit dem Leitungsrohr 2 das Mitnahmeelement 4 und das Dichtelement 3 bis in den zylindrischen Abschnitt 7 des Fittings 1 verschoben, wobei das Mitnahmeelement 4 gemeinsam mit dem Dichtelement 3 entlang des Übergangs 6 radial gestaucht wird.

Die Dichtwirkung wird durch die radiale Komprimierung des Dichtelementes 3 im Mitnahmeelement 4 erzielt, wobei das Dichtelement 3 im vom Mitnahmeelement 4 nicht umfassten Bereich über die aktivierten Rückstellkräfte zur Leitungsrohrseite hin abdichtet. Die Abdichtung zur Fittingseite erfolgt über das am Innenumfang des zylindrischen Abschnittes 7 des Fittings 1 angepresste Mitnahmeelement 4. Idealerweise ist die Komprimierung so groß, dass neben dem Dichteffekt auch eine axiale Sicherung der Verbindung erreicht wird.

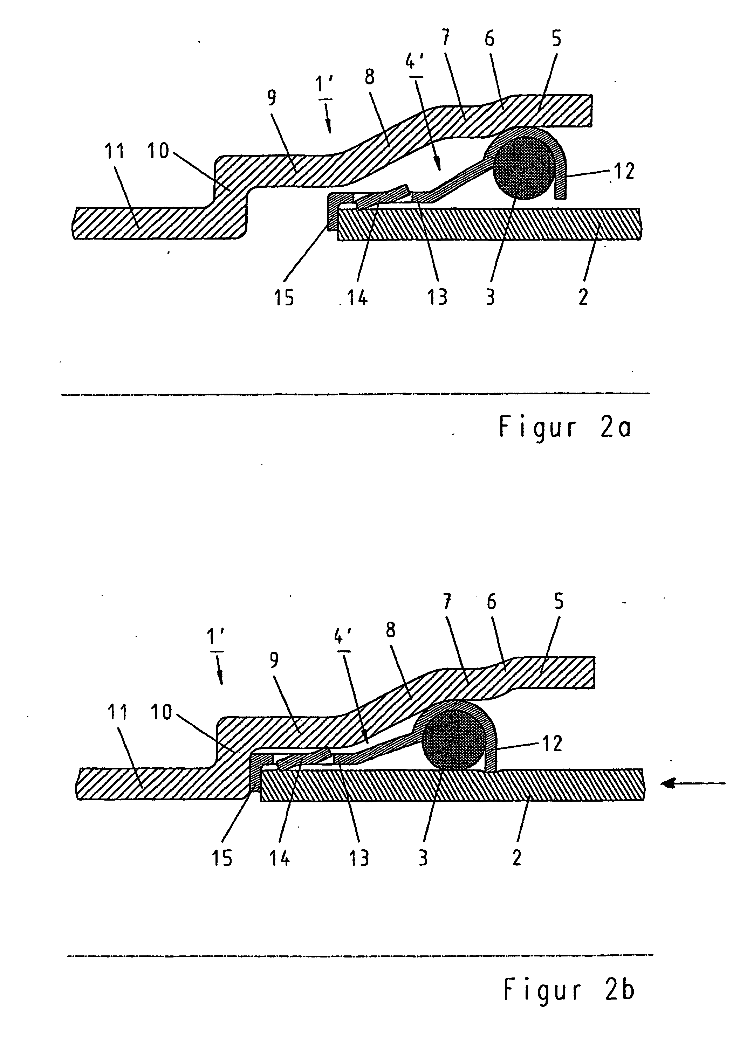

**Figur 2a und b** zeigt ein verbessertes Ausführungsbeispiel mit zusätzlichen Axialsicherungen der Rohrverbindung durch Verkrallelemente. Das Mitnahmeelement 4' ist als Sicherungselement ausgebildet und weist am rückwärtigen Ende einen sich radial erstreckenden Abschnitt 12 auf.

Gemäß **Figur 2a** ist das Leitungsrohr 2 in den Einschubbereich des Fittings 1' eingeführt, wobei die Stirnfläche des Leitungsrohres 2 an dem Kragen 15 des vormontierten Mitnahmeelements 4' zur Anlage kommt. Ein Kontakt des Leitungsrohres 2 mit dem Dichtelement 3 oder den Verkrallelementen 12 findet hierbei nicht statt.

Im Unterschied zur Ausführung gemäß **Figur 1a** und **b** schließt sich bei diesem Fitting 1' an den zylindrischen Abschnitt 7 ein Übergangsabschnitt 8 an, dem sich ein weiterer, das Leitungsrohr 2 aufnehmender zylindrischer Abschnitt 9 anschließt.

An den zylindrischen Abschnitt 9 schließt sich ein weiterer, einen Axialanschlag für das Leitungsrohr bildender Übergang 10 an.

Bei der Montage der Rohrverbindung wird bei einer weiteren axialen Verschiebung des Leitungsrohres 2 in den Fitting 1', gemäß **Figur 2b,** das Mitnahmeelement 4' und das Dichtelement 3 in den zylindrischen Abschnitt 7 des Fittings 1' verschoben, wobei das Mitnahmeelement 4' mit dem Dichtelement 3 entlang des Übergangs 6 radial gestaucht wird.

Die Abdichtung der Rohrverbindung erfolgt wie in **Figur 1** beschrieben. Die zusätzliche axiale Sicherung der Rohrverbindung wird durch ein Verkrallen des radial sich erstreckenden Abschnittes 12 am rückwärtigen Endes des Mitnahmeelementes 4' mit der Mantelfläche des Leitungsrohres 2 erreicht. Der radial sich erstreckende Abschnitt 12 kann ringscheibenförmig ausgebildet sein oder aus einzelnen Verkralletementen bestehen.

Als Alternative oder zusätzliche axiale Ausziehsicherung der Rohrverbindung, weist das Mitnahmelement 4' zwischen Kragen 15 und dem Beginn des Umfassungsbereiches des Dichtelementes 3 einen hülsenförmigen Abschnitt 13 auf. In der axialen Erstreckung des hülsenförmigen Abschnittes 13 sind Verkrallelemente 14, ausgehend von der Horizontalen, verschwenkt angeordnet.

Die Axialsicherung wird dadurch erreicht, dass mit dem Leitungsrohr 2 der hülsenförmige Abschnitt 13 des Mitnahmeelementes 4' soweit in den zylindrischen Abschnitt 9 des Fittings 1' hinein geschoben wird, dass die verschwenkten Verkrallelemente 14 des hülsenförmigen Abschnittes 13 sich in dem zwischen Außenumfang des Leitungsrohres 2 und Innenumfang des Fittings 1' gebildeten Ringspalt mit der Mantelfläche des Fittings 1' und der Mantelfläche des Leitungsrohres 2 axial sichernd verkrallen.

Im endmontierten Zustand ist das Leitungsrohr 2 soweit in den Fitting 1' eingeschoben, dass der Kragen 15 des Mitnahmeteiles 4' an einem Axialanschlag 10 des Fittings 1' zur Anlage kommt.

Der Innendurchmesser des sich an den Axialanschlag 10 anschließenden zylindrischen Abschnittes 11 des Fittings 1' entspricht vorteilhaft dem Innendurchmesser des Leitungsrohres 2, so dass ein strömungsgünstiges Fluchten zwischen Fitting 1' und Leitungsrohr 2 gewährleistet wird.

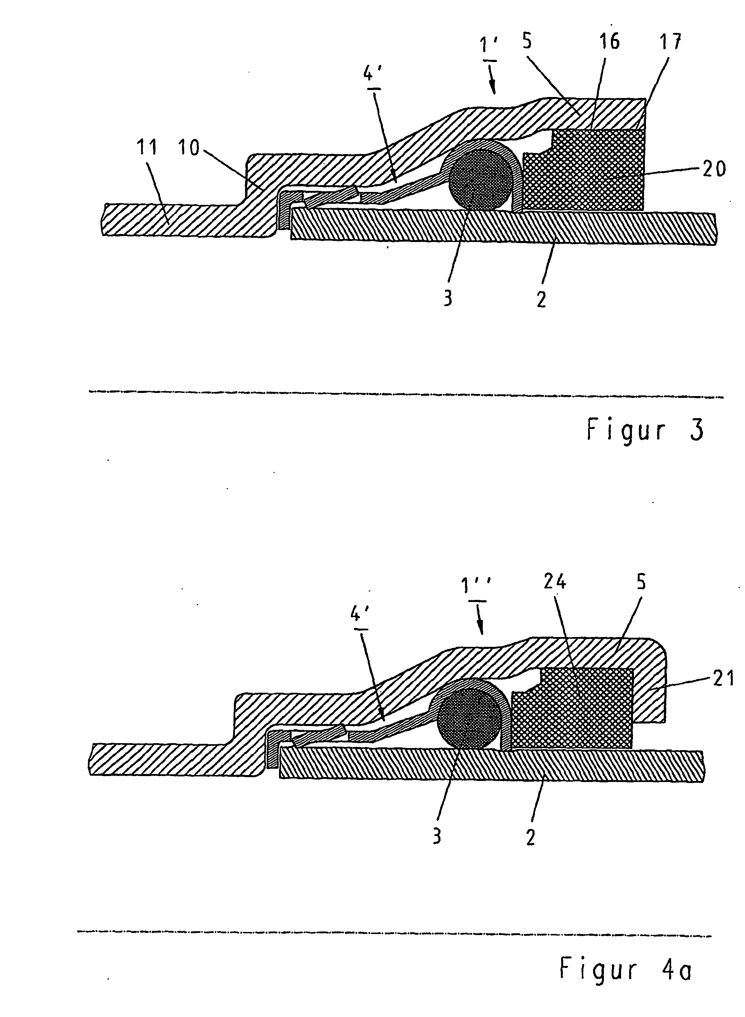

**Figur 3** zeigt eine Lösesicherung einer axial gesicherten Rohrverbindung gemäß **Figur 2**, durch einen einschraubbaren Klemmring 20. Der Klemmring 20 ist am Außenumfang mit einem Gewinde 16 in den mit einem innengewinde 17 versehenen aufgeweiteten Abschnitt 5 des Fittings 1' eingeschraubt. Der Innendurchmesser des Klemmringes 20 ist so bemessen, dass eine axiale Verschiebung des Klemmringes 20 über dem Außenumfang des Leitungsrohres 2 möglich ist.

Der Klemmring 20 befindet sich in der axialen Endlage, wobei die Stirnfläche des Klemmrings 20 an der in Einschubrichtung weisenden Stirnfläche des Mitnahmeelementes 4' zur Anlage kommt.

Über eine entsprechend gewählte Gewindelänge kann ebenfalls die Stärke der Verkrallung des Mitnahmeelements 4' mit dem Leitungsrohr 2 eingestellt werden.

**Figur 4a** zeigt eine Lösesicherung einer axial gesicherten Rohrverbindung gemäß **Figur 2** durch einen elastischen Klemmring 24. Der elastische Klemmring 24 ist durch radiales Stauchen in den zwischen dem Leitungsrohr 2 und dem aufgeweiteten Abschnitt 5 des Fittings 1" entstandenen Ringspalt axial bis zur Endposition eingeschoben, so dass die Stirnseite des Klemmringes 24 mit der in Einschubrichtung weisenden Stirnfläche des Mitnahmeelementes 4' zur Anlage kommt

Die Verklemmung wird dabei über den durch die Rückstellkräfte des elastischen Klemmringmaterials erzeugten Reibschluss zwischen Klemmring 24 und Fitting 1" erzeugt.

Die Lösesicherung des Klemmringes 24 kann über einen sich radial nach innen erstreckenden, umklapp- oder umbördelbaren, Kragen 21 des aufgeweiteten Abschnittes 5 des Fittings 1" erfolgen, der mit der einschubseitigen Stirnfläche des Klemmringes 24 zur Anlage kommt.

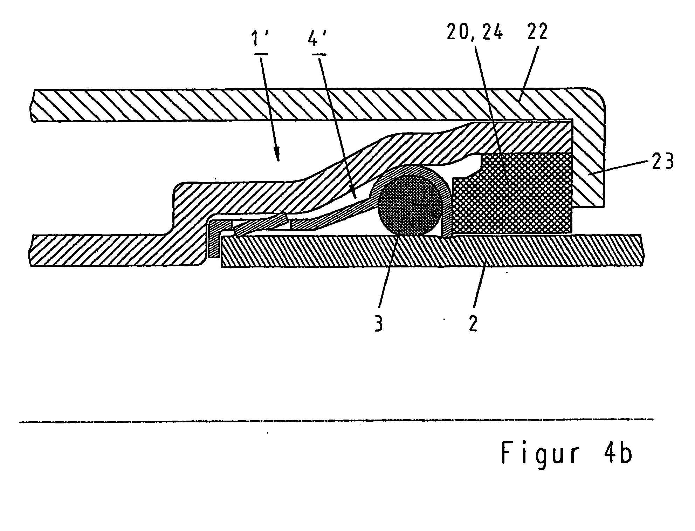

Eine andere Möglichkeit den Klemmring gegen Lösen zu sichern, zeigt **Figur 4b**, wobei an dem Fitting 1' ein nur teilweise dargestelltes Halteelement 22 fest montiert ist. Dieses Halteelement 22 ist ebenfalls mit einem sich radial nach innen erstreckenden Kragen 23 versehen, der im endmontierten Zustand an der einschubseitigen Stirnfläche des Klemmringes 20 oder 24 zur Anlage kommt.

### Bezugszeichenliste

| **Nr.** | **Bezeichnung** |
|---|---|
| 1, 1', 1" | Fitting |
| 2 | Leitungsrohr |
| 3 | Dichtelement |
| 4, 4' | Mitnahmeelement |
| 5 | aufgeweiteter Abschnitt |
| 6 | Übergangsabschnitt |
| 7 | zylindrischer Abschnitt |
| 8 | Übergangsabschnitt |
| 9 | zylindrischer Abschnitt (Aufnahme Leitungsrohr) |
| 10 | Axialanschlag |
| 11 | zylindrischer Abschnitt |
| 12 | radialer Abschnitt (Mitnahmeelement) |
| 13 | hülsenförmiger Abschnitt (Mitnahmeelement) |
| 14 | Verkrallelemente (hülsenförmiger Abschnitt Mitnahmeelement) |
| 15 | Kragen (Mitnahmeelement) |
| 16 | Außengewinde Klemmring |
| 17 | Innengewinde Fitting |
| 20 | Klemmring (hart) |
| 21 | Kragen (Fitting) |
| 22 | Halteelement |
| 23 | Kragen (Halteelement) |
| 24 | Klemmring (elastisch) |

## Patentansprüche

1. Rohrverbindung umfassend einen Fitting (1, 1', 1") der im Einschubbereich mit einem Dichtelement (3) versehen ist und in den ein Leitungsrohr (2) einschlebbar und ohne Verpresswerkzeug abdichtbar und axial sicherbar ist, wobei
das einschubseitige Ende des Fittings (1, 1', 1"), ausgehend von einem das Leitungsrohr (2) aufnehmenden zylindrischen Abschnitt (7) aufgeweitet und das Dichtelement (3) durch ein einen radial sich erstreckenden Kragen (15) aufweisendes Mitnahmeelement (4, 4') teilweise umfasst ist, wobei im Ausgangszustand das Dichtelement (3) mitsamt dem Mitnahmeelement (4, 4') im aufgeweiteten Abschnitt (5) angeordnet ist, **dadurch gekennzeichnet,**
**dass** der Innendurchmesser des Dichtelementes (3) größer ist als der Außendurchmesser des Leitungsrohres (2) so, dass beim Einschieben des Leitungsrohres (2) der Kragen (15) des Mitnahmeelementes (4, 4') an der Stirnseite des Leitungsrohres (2) zur Anlage kommt und nach Einschub in den zylindrischen Abschnitt (7) das Dichtelement (3) abdichtend auf die Mantelfläche des Leitungsrohres (2) gedrückt ist und das das Dichtelement (3) umfassende Mitnahmeelement (4, 4') abdichtend auf der Innenseite des zylindrischen Abschnittes (7) des Fittings (1, 1', 1") zur Anlage kommt.

2. Rohrverbindung nach Anspruch 1
**dadurch gekennzeichnet,**
**dass** das Mitnahmeelement (4') als Sicherungselement ausgebildet ist, mit einem am rückwärtigen Ende radial sich erstreckenden Abschnitt (12), der nach dem Einschub des Leitungsrohres (2) in den zylindrischen Abschnitt (7) des Fittings (1', 1") sich mit der Mantelfläche des Leitungsrohres (2) axial sichernd verkrallt.

3. Rohrverbindung nach Anspruch 1 und 2
**dadurch gekennzeichnet,**
**dass** das Mitnahmeelement (4, 4') aus Metall oder hartem Kunststoff besteht.

4. Rohrverbindung nach den Ansprüchen 1 - 3
**dadurch gekennzeichnet,**
**dass** die den Fitting (1,1', 1") berührende Mantelfläche des Mitnahmeelementes (4, 4') gitterartige Unterbrechungen aufweist.

5. Rohrverbindung nach Ansprüchen 1 - 3
**dadurch gekennzeichnet,**
**dass** die den Fitting (1,1`, 1") berührende Mantelfläche des Mitnahmeelementes (4,4') eine reduzierte Wanddicke aufweist.

6. Rohrverbindung nach Ansprüchen 1 - 3
**dadurch gekennzeichnet,**
**dass** die den Fitting (1,1', 1") berührende Mantelfläche des Mitnahmeelementes (4, 4') aus einem elastischen Kunststoff besteht.

7. Rohrverbindung nach einem der Ansprüche 1 - 6
**dadurch gekennzeichnet,**
**dass** sich an den zylindrischen Abschnitt (7) des Fitting (1', 1") ein Übergangsabschnitt (8) und ein weiterer, das Leitungsrohr (2) aufnehmender zylindrischer Abschnitt (9) anschließt.

8. Rohrverbindung nach einem der Ansprüche 1 - 7
**dadurch gekennzeichnet,**
**dass** das Mitnahmeelement (4') zwischen dem Kragen (15) und dem Beginn des Umfassungsbereiches des Dichtelementes (3) einen axial sich erstreckenden hülsenförmigen Abschnitt (13) aufweist.

9. Rohrverbindung nach Anspruch 8
**dadurch gekennzeichnet,**
**dass** der Innendurchmesser des hülsenförmigen Abschnittes (13) mindestens dem Außendurchmesser des Leitungsrohres (2) entspricht.

10. Rohrverbindung nach einen der Ansprüche 8 oder 9,
**dadurch gekennzeichnet,**
**dass** der Innendurchmesser des zylindrischen Abschnittes (7, 9) des Fittings (1', 1") mindestens dem Außendurchmesser des hülsenförmigen Abschnittes (13) des Mitnahmeelementes (4') entspricht.

11. Rohrverbindung nach einen der Ansprüche 8-10
**dadurch gekennzeichnet,**
**dass** die axiale Erstreckung des zylindrischen Abschnittes (7, 9) des Fittings (1', 1") mindestens der axialen Erstreckung des hülsenförmigen Abschnittes (13) des Mitnahmeelementes (4') entspricht.

12. Rohrverbindung nach einen der Ansprüche 8 - 11
**dadurch gekennzeichnet,**
**dass** die Mantelfläche des hülsenförmigen Abschnittes (13) des Mitnahmeelementes (4') mit Verkrallelementen (14) versehen ist.

13. Rohrverbindung nach Anspruch 12
**dadurch gekennzeichnet,**
**dass** die Verkrallelemente (14) im vormontierten Zustand des Fittings (1', 1") aus der Ebene des hülsenförmigen Abschnittes (13) des Mitnahmeelementes (4') verschwenkt angeordnet sind.

14. Rohrverbindung nach Anspruch 12 und 13
**dadurch gekennzeichnet,**
**dass** die Verkrallelemente (14) zur Einschubseite hin radial nach außen und die gegenüberliegende Seite radial nach innen verschwenkt angeordnet sind.

15. Rohrverbindung nach einem der Ansprüche 12-14
**dadurch gekennzeichnet,**
**dass** im endmontierten Zustand der Endbereich des Leitungsrohres (2) mitsamt dem hülsenförmigen Abschnitt (13) des Mitnahmeelementes (4') axial bis in den Bereich des zylindrischen Abschnittes (9) des Fittings (1', 1") verschoben ist, wobei sich die Verkrallelemente (14) des Mitnahmeelementes (4') mit der Mantelfläche des Leitungsrohres (2) axial sichernd verkrallen.

16. Rohrverbindung nach Anspruch 1,
**dadurch gekennzeichnet,**
**dass** das Dichtelement (3) als elastischer Dichtring ausgebildet ist.

17. Rohrverbindung nach einem der Ansprüche 1 - 16
**dadurch gekennzeichnet,**
**dass** in dem sich zwischen Leitungsrohr (2) und aufgeweiteten Abschnitt (5) des Fittings (1, 1', 1") ergebenden Radialspalt ein Klemmring (20, 24) angeordnet ist, der im endmontierten Zustand des Leitungsrohres (2) mit der zur Einschubseite weisenden Stirnfläche des Mitnahmeelementes (4, 4') gegen axiales Lösen gesichert, zur Anlage kommt.

18. Rohrverbindung nach Anspruch 17
**dadurch gekennzeichnet,**
**dass** der Klemmring (20) aus Metall oder hartem Kunststoff besteht.

19. Rohrverbindung nach Anspruch 17 und 18
**dadurch gekennzeichnet,**
**dass** der Klemmring (20) mit einem Außengewinde (16) und der Innenumfang des aufgeweiteten Abschnittes (5) des Fittings (1, 1') mit einem komplementär dazu ausgebildeten Innengewinde (17) versehen ist.

20. Rohrverbindung nach Anspruch 17
**dadurch gekennzeichnet,**
**dass** der Klemmring (24) aus einem elastischen Material besteht.

21. Rohrverbindung nach Anspruch 20
**dadurch gekennzeichnet,**
**dass** die radiale Querschnittserstreckung in der Vertikalebene des Klemmrings (24) im Ausgangszustand größer ist, als die radiale Querschnittserstreckung zwischen dem aufgeweiteten Abschnitt (5) des Fittings (1,1', 1") und dem eingeschobenen Leitungsrohr (2).

22. Rohrverbindung nach den Ansprüchen 20 und 21,
**dadurch gekennzeichnet,**
**dass** der einschubseitige Endbereich des aufgeweiteten Abschnittes (5) des Fittings (1") im endmontierten Zustand einen radial nach innen gerichteten Kragen (21) aufweist, der an der einschubseitigen Stirnfläche des Klemmrings (24) zur Anlage kommt

23. Rohrverbindung nach einem der Ansprüche 17 - 22,
**dadurch gekennzeichnet,**
**dass** der Fitting (1, 1') ein gegen axiales Lösen gesichertes Halteelement (22) mit einem sich radial nach innen oder außen erstreckenden Kragen (23) aufweist, der im endmontierten Zustand an der einschubseitigen Stirnfläche des Klemmringes (20, 24) zur Anlage kommt.

## Claims

1. Pipe connection comprising a pipe fitting (1, 1', 1") which has a sealing element (3) in the insertion area and into which can be inserted a pipe (2) and which can be sealed and secured axially without a compression tool, wherein the insertion end of the pipe fitting (1, 1', 1") is made wider starting from a cylindrical section (7) which accepts the pipe (2), and the sealing element (3) is partly encircled by a pulling element (4, 4') which has a collar (15) that extends radially, wherein, in the initial condition, the sealing element (3) together with the pulling element (4, 4') is positioned in the widened section (5),
**characterised in that**
the internal diameter of the sealing element (3) is greater than the external diameter of the pipe (2), so that when the pipe (2) is inserted, the collar (15) of the pulling element (4, 4') rests on the front face of the pipe (2) and, after being inserted into the cylindrical section (7), the sealing element (3) is pressed in a sealing manner on to the surface of the pipe (2), and the pulling element (4, 4') that encircles the sealing element (3) rests in a sealing manner against the inside of the cylindrical section (7) of the pipe fitting (1, 1', 1").

2. Pipe connection as in claim 1,
**characterised in that**
the pulling element (4') is in the form of a securing element with a section (12) that extends radially at the rear end, which section digs into the surface of the pipe (2) in an axially sealing manner after the insertion of the pipe (2) into the cylindrical section (7) of the pipe fitting (1', 1").

3. Pipe connection as in claims 1 and 2,
**characterised in that**
the pulling element (4, 4') is made of metal or hard plastic.

4. Pipe connection as in claims 1 to 3,
**characterised in that**
the surface of the pulling element (4, 4') that touches the pipe fitting (1, 1', 1") has lattice-like gaps.

5. Pipe connection as in claims 1 to 3,
**characterised in that**
the surface of the pulling element (4, 4') that touches the pipe fitting (1, 1', 1") has a reduced wall thickness.

6. Pipe connection as in claims 1 to 3,
**characterised in that**
the surface of the pulling element (4, 4') that touches the pipe fitting (1, 1', 1") is made of flexible plastic.

7. Pipe connection as in one of claims 1 to 6,
**characterised in that**
a transitional section (8) and another cylindrical section (9) that accepts the pipe (2) adjoin the cylindrical section (7) of the pipe fitting (1', 1").

8. Pipe connection as in one of claims 1 to 7,
**characterised in that**
the pulling element (4') has a sleeve-shaped axially extending section (13) between the collar (15) and the start of the encircling area of the sealing element (3).

9. Pipe connection as in claim 8,
**characterised in that**
the internal diameter of the sleeve-shaped section (13) is at least equal to the external diameter of the pipe (2).

10. Pipe connection as in one of claims 8 or 9,
**characterised in that**
the internal diameter of the cylindrical section (7, 9) of the pipe fitting (1', 1") is at least equal to the external diameter of the sleeve-shaped section (13) of the pulling element (4').

11. Pipe connection as in one of claims 8 to 10,
**characterised in that**
the axial extent of the cylindrical section (7, 9) of the pipe fitting (1', 1") is at least equal to the axial extent of the sleeve-shaped section (13) of the pulling element (4').

12. Pipe connection as in one of claims 8 to 11,
**characterised in that**
the surface of the sleeve-shaped section (13) of the pulling element (4') is fitted with clawing elements (14).

13. Pipe connection as in claim 12,
**characterised in that**,
in the pre-assembled condition of the pipe fitting (1', 1"), the clawing elements (14) are tilted out of the plane of the sleeve-shaped section (13) of the pulling element (4').

14. Pipe connection as in claims 12 and 13,
**characterised in that**
the clawing elements (14) are tilted radially outwards facing towards the insertion side, and the opposite side radially inwards.

15. Pipe connection as in one of claims 12 to 14,
**characterised in that**
in the fully-assembled condition, the end area of the pipe (2), together with the sleeve-shaped section (13) of the pulling element (4'), is moved axially as far as the area of the cylindrical section (9) of the pipe fitting (1', 1"), during which process the clawing elements (14) of the pulling element (4') dig into the surface of the pipe (2) in an axially securing manner.

16. Pipe connection as in claim 1,
**characterised in that**
the sealing element (3) is in the form of a flexible sealing washer.

17. Pipe connection as in one of claims 1 to 16,
**characterised in that**
a locking ring (20, 24) is positioned in the radial gap formed between the pipe (2) and the widened section (5) of the pipe fitting (1, 1', 1"), which locking ring rests, in the fully-assembled condition of the pipe (2), with the front face of the pulling element (4, 4') that faces the insertion side secured against axial slackening.

18. Pipe connection as in claim 17,
**characterised in that**
the locking ring (20) is made of metal or hard plastic.

19. Pipe connection as in claim 17 and 18,
**characterised in that**
the locking ring (20) is fitted with an external thread (16), and the inner circumference of the widened section (5) of the pipe fitting (1, 1') is fitted with an internal thread (17) made to be complementary to same.

20. Pipe connection as in claim 17,
**characterised in that**
the locking ring (24) is made of a flexible material.

21. Pipe connection as in claim 20,
**characterised in that**
the radial cross-sectional extent in the vertical plane of the locking ring (24) is, in the initial condition, greater than the radial cross-sectional extent between the widened section (5) of the pipe fitting (1, 1', 1") and the inserted pipe (2).

22. Pipe connection as in claims 20 and 21,
**characterised in that**
the end area at the insertion side of the widened section (5) of the pipe fitting (1") has, in the fully-assembled condition, a collar (21) that faces radially inwards, which collar rests against the insertion-side face of the locking ring (24).

23. Pipe connection as in one of claims 17 to 22,
**characterised in that**
the pipe fitting (1, 1') has a holding element (22), which is secured against axial slackening, with a collar (23) that extends radially inwards or outwards, which collar rests, in the fully-assembled condition, on the insertion-side face of the locking ring (20, 24).

## Revendications

1. Dispositif de liaison pour tube comprenant un raccord (1, 1', 1 ") qui est pourvu d'un élément d'étanchéité (3) dans la zone d'insertion et dans lequel un tube de conduite (2) peut être inséré et peut être étanché et bloqué axialement sans outil de compression, l'extrémité côté insertion du raccord (1, 1', 1 ") étant élargie en partant d'une section cylindrique (7) recevant le tube de conduite (2) et l'élément d'étanchéité (3) étant en partie inclus dans un élément d'entraînement (4, 4') présentant un col (15) s'étendant radialement, l'élément d'étanchéité (3) avec l'élément d'entraînement (4, 4') étant agencé dans la section élargie (5) dans l'état initial,
**caractérisé en ce que** le diamètre intérieur de l'élément d'étanchéité (3) est supérieur au diamètre extérieur du tube de conduite (2), de sorte que, lors de l'insertion du tube de conduite (2), le col (15) de l'élément d'entraînement (4, 4') vient en appui contre le côté frontal du tube de conduite (2) et qu'après l'insertion dans la section cylindrique (7) l'élément d'étanchéité (3) est pressé de manière étanche sur la surface d'enveloppe du tube de conduite (2) et l'élément d'entraînement (4, 4') comportant l'élément d'étanchéité (3) vient s'appuyer de manière étanche sur la face intérieure de la section cylindrique (7) du raccord (1, 1', 1 ").

2. Dispositif de liaison pour tube selon la revendication 1,
**caractérisé en ce que** l'élément d'entraînement (4') est réalisé en tant qu'élément de blocage, avec une section (12) s'étendant radialement à l'extrémité arrière, laquelle section, après l'insertion du tube de conduite (2) dans la section cylindrique (7) du raccord (1', 1 "), s'agrippe sur la surface d'enveloppe du tube de conduite (2) de manière à former un blocage axial.

3. Dispositif de liaison pour tube selon la revendication 1 ou 2,
**caractérisé en ce que** l'élément d'entraînement (4, 4') est fabriqué en métal ou en matière plastique dure.

4. Dispositif de liaison pour tube suivant les revendications 1 à 3,
**caractérisé en ce que** la surface d'enveloppe, en contact avec le raccord (1 , 1', 1 "), de l'élément d'entraînement (4, 4') présente des interruptions en forme de grille.

5. Dispositif de liaison pour tube selon les revendications 1 à 3,
**caractérisé en ce que** la surface d'enveloppe, en contact avec le raccord (1, 1', 1 "), de l'élément d'entraînement (4, 4') présente une épaisseur de paroi réduite.

6. Dispositif de liaison pour tube selon les revendications 1 à 3,
**caractérisé en ce que** la surface d'enveloppe, en contact avec le raccord (1, 1', 1 "), de l'élément d'entraînement (4, 4') est fabriquée dans une matière plastique élastique.

7. Dispositif de liaison pour tube selon l'une des revendications 1 à 6,
**caractérisé en ce que** la section cylindrique (7) du raccord (1', 1 ") est suivie d'une section de transition (8) et d'une autre section cylindrique (9) recevant le tube de conduite (2).

8. Dispositif de liaison pour tube selon l'une des revendications 1 à 7,
**caractérisé en ce que** l'élément d'entraînement (4') présente entre le col (15) et le début de la zone d'inclusion de l'élément d'étanchéité (3) une section en forme de manchon (13) s'étendant axialement.

9. Dispositif de liaison pour tube selon la revendication 8,
**caractérisé en ce que** le diamètre intérieur de la section en forme de manchon (13) correspond au moins au diamètre extérieur du tube de conduite (2).

10. Dispositif de liaison pour tube selon l'une des revendications 8 ou 9,
**caractérisé en ce que** le diamètre intérieur de la section cylindrique (7, 9) du raccord (1', 1 ") correspond au moins au diamètre extérieur de la section en forme de manchon (13) de l'élément d'entraînement (4').

11. Dispositif de liaison pour tube selon l'une des revendications 8 à 10,
**caractérisé en ce que** l'étendue axiale de la section cylindrique (7, 9) du raccord (1', 1 ") correspond au moins à l'étendue axiale de la section en forme de manchon (13) de l'élément d'entraînement (4').

12. Dispositif de liaison pour tube selon l'une des revendications 8 à 11,
**caractérisé en ce que** la surface d'enveloppe de la section en forme de manchon (13) de l'élément d'entraînement (4') est pourvue d'éléments d'agrippement (14).

13. Dispositif de liaison pour tube selon la revendication 12,
**caractérisé en ce que** les éléments d'agrippement (14), dans l'état pré-monté du raccord (1', 1 "), sont agencés basculés hors du plan de la section en forme de manchon (13) de l'élément d'entraînement (4').

14. Dispositif de liaison pour tube selon la revendication 12 ou 13,
**caractérisé en ce que** les éléments d'agrippement (14) sont agencés basculés radialement vers l'extérieur du côté insertion et radialement vers l'intérieur du côté opposé.

15. Dispositif de liaison pour tube selon l'une des revendications 12 à 14,
**caractérisé en ce que**, dans l'état du montage fini, la zone d'extrémité du tube de conduite (2) avec la section en forme de manchon (13) de l'élément d'entraînement (4') est poussée axialement jusque dans la zone de la section cylindrique (9) du raccord (1', 1 "), les éléments d'agrippement (14) de l'élément d'entraînement (4') s'agrippant sur la surface d'enveloppe du tube de conduite (2) de manière à former un blocage axial.

16. Dispositif de liaison pour tube selon la revendication 1,
**caractérisé en ce que** l'élément d'étanchéité (3) est réalisé en tant que bague d'étanchéité élastique.

17. Dispositif de liaison pour tube selon l'une des revendications 1 à 16,
**caractérisé en ce qu'**une bague de serrage (20, 24) est agencée dans l'interstice radial créé entre le tube de conduite (2) et la section élargie (5) du raccord (1, 1', 1 "), laquelle bague, à l'état monté final du tube de conduite (2), vient en appui sur la surface frontale de l'élément d'entraînement (4, 4') orientée vers le côté d'insertion, afin de créer un blocage contre le détachement axial.

18. Dispositif de liaison pour tube selon la revendication 17,
**caractérisé en ce que** la bague de serrage (20) est fabriquée en métal ou en matière plastique dure.

19. Dispositif de liaison pour tube selon la revendication 17 ou 18,
**caractérisé en ce que** la bague de serrage (20) est pourvue d'un filetage extérieur (16) et **en ce que** le pourtour intérieur de la section élargie (5) du raccord (1, 1') est pourvu d'un taraudage (17) réalisé de façon complémentaire au premier.

20. Dispositif de liaison pour tube selon la revendication 17,
**caractérisé en ce que** la bague de serrage (24) est fabriquée dans une matière élastique.

21. Dispositif de liaison pour tube selon la revendication 20,
**caractérisé en ce que** l'étendue radiale de la section transversale dans le plan vertical de la bague de serrage (24) à l'état initial est supérieure à l'étendue radiale de la section transversale entre la section élargie (5) du raccord (1, 1', 1") et le tube de conduite (2) inséré.

22. Dispositif de liaison pour tube selon la revendication 20 ou 21,
**caractérisé en ce que** la zone d'extrémité côté insertion de la section élargie (5) du raccord (1 "), à l'état monté final, présente un col (21) dirigé radialement vers l'intérieur, lequel vient en appui contre la surface frontale de la bague de serrage (24) côté insertion.

23. Dispositif de liaison pour tube selon l'une des revendications 17 à 22,
**caractérisé en ce que** le raccord (1, 1 ') présente un élément de retenue (22) bloqué contre tout détachement axial ayant un col (23) s'étendant radialement vers l'intérieur ou l'extérieur, lequel col, à l'état monté final, vient en appui contre la surface frontale de la bague de serrage (20, 24) côté insertion.
